# EUROPEAN PATENT SPECIFICATION

(11) **EP 2 106 177 B1**
(45) Date of publication and mention of the grant of the patent: **29.06.2011**
(21) Application number: 09004338.1
(22) Date of filing: 26.03.2009
(51) Int. Cl.: H04W 24/06

(54) **Testing method of an IC card including a Zigbee device**
Prüfverfahren für eine IC-Karte mit einer Zigbee-Vorrichtung
Procédé de test d'une carte de circuit imprimé incluant un dispositif ZigBee

(30) Priority: 28.03.2008 IT MI20080533
(43) Date of publication of application: 30.09.2009
(73) Proprietor: Incard SA, 1204 Geneve (CH)
(72) Inventor: Longo, Raffaele, 80137 Napoli (IT)
(74) Representative: Botti, Mario

(56) References cited:
- KR-A- 20070 066 125
- "IEEE standard for information technology - telecommunications and information exchange between systems - local and metropolitan area networks specific requirements part 15.4: wireless medium access control (MAC) and physical layer (PHY) specifications for low-rate wireless personal area networks (LR" IEEE STANDARD; [IEEE STANDARD], IEEE, PISCATAWAY, NJ, USA, 1 January 2003 (2003-01-01), pages _1-670, XP017600966 ISBN: 978-0-7381-3677-6
- EREN H ET AL: "Technical Challenges for Wireless Instrument Networks - A Case Study with ZigBee" PROCEEDINGS OF THE 2007 IEEE SENSORS APPLICATIONS SYMPOSIUM, IEEE - PISCATAWAY, NJ, USA, 1 February 2007 (2007-02-01), pages 1-6, XP031180447 ISBN: 978-1-4244-0677-7
- ZUCATTO F L ET AL: "ZigBee for building control wireless sensor networks" MICROWAVE AND OPTOELECTRONICS CONFERENCE, 2007. IMOC 2007. SBMO/IEEE M TT-S INTERNATIONAL, IEEE, PI, 29 October 2007 (2007-10-29), pages 511-515, XP031223432 ISBN: 978-1-4244-0660-9

## Description

### Field of application

The present invention relates to a method for testing a ZigBee device included in an IC Card, comprising the following steps:
- associating a predetermined PAN (Personal Area Network) Identificator to the ZigBee device;
- providing a test device which initializes a ZigBee network;
- connecting the ZigBee device to the ZigBee network and transmitting the corresponding PAN Identificator (3a) to the test device,
such method returning a fault message, indicative of a failure of said step of connecting and transmitting, if the test device does not receive the PAN Identificator (3a).

The present invention also relates to a test device for testing a ZigBee device of the type included in an IC Card and associated to a predetermined PAN Identificator, comprising means for initializing a ZigBee network whereto the ZigBee device may connect and transmit the corresponding PAN Identificator and means for returning a fault message, indicative that such ZigBee device is unable to connect and transmit, if the PAN Identificator is not received.

### Prior Art

As it is well known, a method for testing an IC Card comprises a phase for checking that the hardware and software resources of the IC Card may communicate with a read write device, according to a predetermined communication standard.

More particularly, the IC Card comprises a System on Chip including a memory portion and a microcontroller, and a set of contact pads for an electrical connection with the read write device.

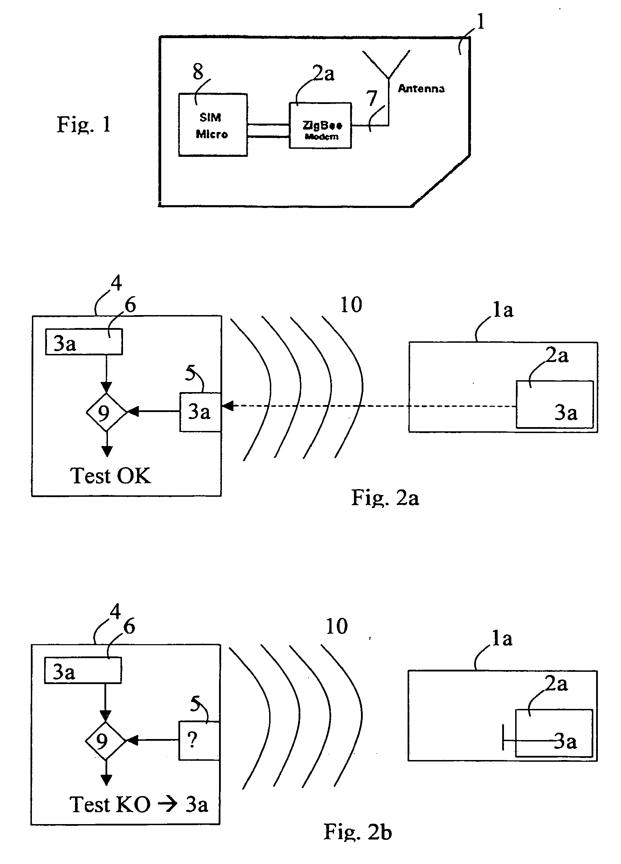

As schematically represented in figure 1, the IC Card 1 may also comprise a ZigBee device 2a including an antenna 7, for a wireless communication with a ZigBee Controller, according to a standard IEEE 802.15.4.

The method for testing such IC Card provides to test both the communication with the read write device, through the electrical connection based on contact pads, and the communication with the ZigBee Controller, through a ZigBee network initialized by the ZigBee Controller.

More particularly, the IC Card 1 may comprise a first System on Chip, including hardware resources for the wireless communication with the ZigBee device, and a second System on Chip, including hardware resources for the communication with the read write device.

In another hardware configuration of the IC Card, both the hardware resources for implementing the communication with the read-write device and the wireless communication with the ZigBee Controller may be included in a single System on Chip.

In the following description, not depending on the System on Chip(s) configuration, the term ZigBee device is used to refer to the hardware and software resources supporting the communication with the ZigBee Controller, while the term IC device is used to refer to the hardware and software resources for implementing the communication with the read write device.

More particularly, the method for testing the IC Card must provide that, not only the IC device is able to communicate with the read write device, but also that the ZigBee device is able to communicate with the ZigBee Controller, according to the respective standards.

A problem of such method for testing is that checking the ZigBee device takes much more time than checking the IC device.

In fact, for testing the ZigBee device, a wireless communication between the Zigbee Controller and the ZigBee device must be established, including a step for initializing a ZigBee network through the ZigBee Controller, a step for connecting the ZigBee device to the ZigBee network, a step for identifying the ZigBee device through the ZigBee Controller and a step for transmitting one or more wireless message to test the transmission capability of the ZigBee device.

More particularly, it is worth to note that IC Cards manufacturers are following the emerging trend of using IC Cards including a Zigbee device for a great number of control applications so that the IC Cards test time is more and more often penalized by the time for checking the ZigBee device. In fact, the demand for interoperability, together with the opportunity costs related with time-to-market, drives the need for compliance testing, making time-efficient, reliable, and cost-effective test solution a necessity.

Another problem of such method for testing is that the ZigBee Controller cannot directly identify and return an identification code of a defective ZigBee device.

In fact, since a defective ZigBee device is unable to connect and transmit over the ZigBee network, for example due to a broken antenna 7, the ZigBee Controller cannot identify it. In other words, the defective ZigBee device may be detected only indirectly for the fact that a predetermined time has elapsed without receiving a response from it. Such method for testing returns a fault message, indicative of a failure of a connection and/or transmission of the ZigBee device, without identifying it.

This method is not advantageous, especially when a plurality of ZigBee devices, for example located on a tape of a production line, must be tested.

More particularly, it is known to associate a predetermined PAN (Personal Area Network) Identificator to the ZigBee device, so that a test device may detect such Identificator and identify the corresponding ZigBee device, when such ZigBee device connects to the ZigBee network. Anyway, it is not possible to identify the corresponding ZigBee device when it is unable to connect to the ZigBee Network, since the PAN Identificator is not transmitted.

The technical problem at the base of the present invention is that of providing a method for testing one or more IC Cards including a respective ZigBee device, avoiding that the time involving the checking of the Zigbee device heavily penalize the time for checking the IC device of such IC Cards, and providing that a defective ZigBee device may be identified even if a ZigBee communication with the Zigbee Controller, cannot be established, in order to allow IC Cards manufacturers to get their IC Cards tested, validated and released as quickly as possible, overcoming the limitations that currently affects the methods for testing according to the prior art.

KR 2007 0066125 A discloses a wireless home network system using ZigBee and its configuration method to minimize errors and losses in transmitting and receiving packets by effectively defining a transmission/reception packet structure of a home network system. However, this document fails to disclose how testing several ZigBee devices including respective IC Cards, avoiding that the time involving the checking of the Zigbee device heavily penalize the time for checking the IC device of such IC Cards.

### Summary of the invention

The solution idea at the base of the present invention is to associate an Identificator to the ZigBee device included in an IC Card to be tested, and to pre-store such Identificator in a test device that initializes a ZigBee network whereto the ZigBee device may connect. In this way, if the ZigBee device connects to the ZigBee network and transmits the corresponding Identificator, the test device detects the corresponding Identificator and return a positive value for the test. On the contrary, if the ZigBee device is unable to connect to the ZigBee network, the test device identifies such ZigBee device on the base of the pre-stored Identificator for which it has not received a corresponding identificator, and returns a fault message identifying the defective ZigBee device.

According to such solution idea the technical problem described above is solved by a method for testing a ZigBee device according to claim 1.

The technical problem described above is also solved by a test device for testing a ZigBee device according to claim 12.

Advantageously, according to the method and the test device of the present invention, the ZigBee devices included in a plurality of IC Cards may be easily and rapidly checked, without slowing down the time for testing the overall hardware and software resources of the IC Card.

Advantageously, according to the method and device of the present invention, checking a communication between the ZigBee device and the ZigBee Coordinator takes no more time than checking a communication between an IC device of such IC Card and a read write device.

Moreover, the test device according to the present invention identifies the defective IC Card by returning a list of Identificators associated to defective IC Cards. Advantageously, the defective IC Cards may be easily selected since their Identificators, stored inside a memory portion of the IC Card, may be read through the read write device, via contact pads, or it may be written on a support of the IC Card so that a user may directly identify it.

Other features and advantages of the method for test and the corresponding test device according to the invention will be apparent from the following description of an embodiment thereof, given by way of non-limitative example with reference to the accompanying drawings.

### Brief description of drawings

- Figure 1 schematically represents an IC Card including a ZigBee device according to the prior art;
- figure 2a schematically represents a method for testing the IC Card of figure 1, according to the present invention;
- figure 2b schematically represents the method for testing a defective IC Card, according to the present invention;
- figure 3 schematically represents a method for testing a plurality of IC Cards, according to the present invention;
- figure 4 schematically represents a phase of the method for testing of figure 3;
- figure 5 schematically represents a couple of test devices working in a same environment with different frequencies for identifying respective PAN IDs, according to the present invention.

### Detailed description

With reference to the annexed drawing, it is schematically represented with numeral reference 4 a test device for testing an IC Card 1a including a ZigBee device 2a. The test device 4 initializes a ZigBee network whereto the ZigBee device 2a may connect.

More particularly, the ZigBee device 2a is associated to a predetermined PAN (Personal Area Network) Identificator 3a, stored in a memory portion of the IC Card 1a.

The ZigBee device 2a connects to the ZigBee network and transmits the predetermined PAN (Personal Area Network) Identificator 3a to the test device 4. However, if the ZigBee device 2a is defective, it cannot transmit the corresponding PAN Identificator 3a over the ZigBee network so that test device 4 does not receive such PAN Identificator 3a.

According to the method of the present invention, the predetermined PAN Identificator 3a of the IC Card 1a to be tested is pre-stored in a memory portion 6 of the test device 4. More particularly, the wording "pre-stored" has been used for specifying that such PAN Identificator 3a is stored in the memory portion 6 before that the test device 4 and the ZigBee device 2 are connected.

More particularly, according to the method of the invention, after that the PAN Identificator 3a is pre-stored inside the memory portion 6 and the ZigBee network is initialized, the test device 4 detects if the ZigBee device 2a transmits the PAN Identificator 3a.

As already states above, if the ZigBee device 2a is a defective ZigBee device, it cannot transmit the corresponding PAN Identificator 3A over the ZigBee network so that the test device 4 does not receive such PAN Identificator 3a.

According to the method for testing, if the test device 4 does not detect the PAN Identificator 3a corresponding to the PAN Identificator 3a pre-stored in the memory portion 6, it returns a fault message, comprising the pre-stored PAN Identificator 3a. In other words, the test device 4 outputs the pre-stored PAN Identificator 3a corresponding to the defective ZigBee device even if it has not received the PAN Identificator 3a from the ZigBee device.

More particularly, with reference to figure 2a, it is schematically represented an execution of the method of the present invention for the detection of a ZigBee device 2a, included in an IC Card 1a, resulting in a positive test. The test device 4 initializes the ZigBee network 10 whereto the ZigBee device 2a may connect for transmitting the PAN Identificator. The test device 4 pre-stores the PAN Identificator 3a of the ZigBee device 2a to be tested inside a memory portion 6. A block 9 receives in input the pre-stored PAN Identificator 3a. When the ZigBee device 2a connects to the ZigBee network 10 and transmits the PAN Identificator 3a, the block 9 receives in input the transmitted PAN Identificator 3a and compares it with the pre-stored PAN Identificator 3a. The test device 4 returns a positive value, eventually together with the PAN Identificator 3a of the ZigBee device 2a tested.

With reference to figure 2b is schematically represented an execution of the method of the present invention for the detection of a defective ZigBee device 2a, included in an IC Card 1a, resulting in negative test and in a corresponding fault message. As described above, the test device 4 initializes the ZigBee network 10 and pre-stores the PAN Identificator 3a of the ZigBee device 2a to be tested inside the memory portion 6. The block 9 receives in input the pre-stored PAN Identificator 3a from the memory portion 6. However, in this case, the ZigBee device 2a cannot connect to the ZigBee network 10 and cannot transmit the PAN Identificator 3a. Consequently, the block 9 does not receive the PAN Identificator 3a from the ZigBee device 2a and cannot compare it with the pre-stored PAN Identificator 3a. The test device 4 returns a negative value, eventually together with the PAN Identificator 3a of the defective ZigBee device 2a.

As it may be appreciated by the following description, the method according to the present invention is particularly advantageous when a plurality of IC Cards, including respective ZigBee devices, are tested.

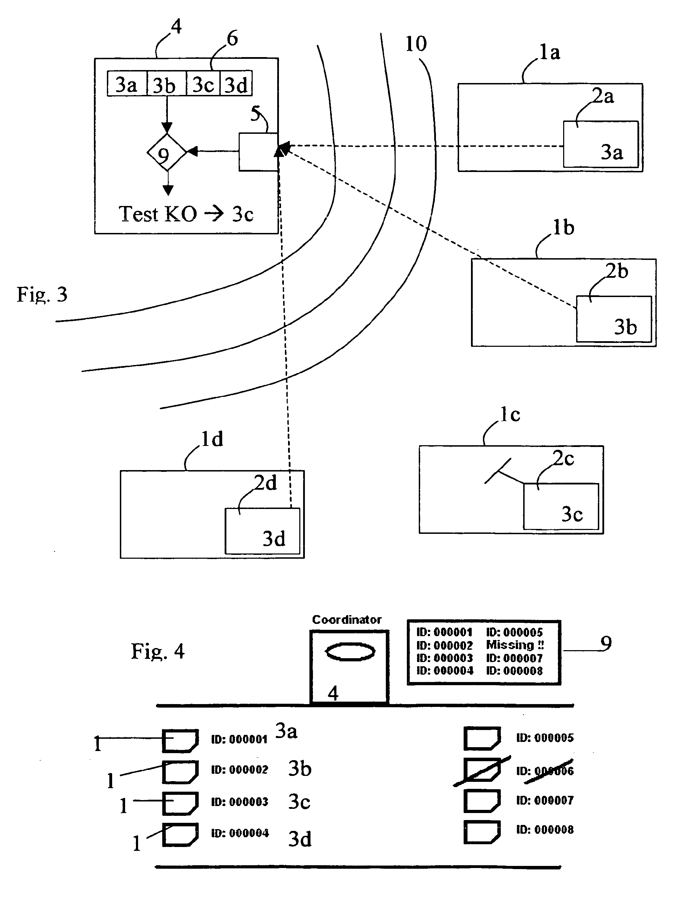

With reference to figure 3, a plurality of IC Cards 1a, 1b, 1c, 1d are represented, including corresponding ZigBee devices 2a, 2b, 2c, 2d which are associated to respective PAN Identificators 3a, 3b, 3c, 3d.

A test device 4 includes a memory portion 6 pre-storing the PAN Identificators 3a, 3b, 3c, 3d associated to the IC Cards to be tested and a block 9 receiving in input the pre-stored PAN Identificators 3a, 3b, 3c, 3d. The test device 4 initializes a ZigBee network 10 so that the ZigBee devices 2a, 2b, 2c, 2d connects and transmits the respective PAN Identificators 3a, 3b, 3c, 3d.

According to the method of the invention, the block 9 receives in input also the transmitted PAN Identificators 3a, 3b, 3c, 3d and compares them with the pre-stored PAN Identificators 3a, 3b, 3c, 3d. As it is schematically represented in figure 3, the ZigBee devices 2a, 2b, 2d connect and transmit the respective PAN Identificators 3a, 3b, 3d while the ZigBee devices 2c, for example due to a broken link between the antenna and the circuitry, is unable to send the PAN Identificator 3c.

In figure 4 it is schematically represented a step of the method according to the invention wherein the block 9 matches a plurality of transmitted PAN Indetificators, including the codes 000001, 000002, 000003, 000004, 000005, 000006, 000007, 000008, to corresponding pre-stored PAN Indetificators that includes the same codes 000001, 000002,000003,000004,000005,000007,000008.

The block 9 is unable to match the pre-stored PAN Indetificators including the codes 000006, because the corresponding ZigBee device 2c is unable to transmit it. So a fault message "missing!!" is generated and the codes 000006 corresponding to the defective ZigBee device 2c is identified.

Advantageously, the PAN identificator 3a associated to the ZigBee device 2a may be written on a physical support of the IC Card so that defective ZigBee devices may be easily and directly identified by a user and removed by the production line. However, since the PAN identificator 3a is stored also inside the IC Card 1a, it may be read through a read write device programmed to read the IC Card, for example via contact pads.

Hereafter are resumed the main steps provided by the method of the invention:
- associating a predetermined PAN (Personal Area Network) Identificator 3a to the ZigBee device 2a;
- providing a test device 4 which initializes a ZigBee network;
- connecting the ZigBee device 2a to the ZigBee network and transmitting the corresponding PAN Identificator 3a to the test device 4.

The method returns a fault message, indicative of a failure of the step of connecting and transmitting, if the test device 4 does not receive the PAN Identificator 3a.

The method also comprises the steps of:
- pre-storing the predetermined PAN Identificator 3a in a memory portion 6 of the test device 4;
- including, in the fault message, the PAN Identificator 3a pre-stored in the memory portion 6 if the test device 4 does not receive the PAN Identificator 3a, in order to identify the ZigBee device 2a as a defective device.

Advantageously, the method may be used to detect a plurality of IC Cards, according to the following steps:
- connecting the plurality of IC Cards 1a, 1b, 1c, 1d including respective ZigBee devices 2a, 2b, 2c, 2d associated to predetermined PAN Identificators 3a, 3b, 3c, 3d to the ZigBee network and transmitting the corresponding PAN Identificators 3a, 3b, 3c, 3d to the test device 4;
- pre-storing the predetermined PAN Identificators 3a, 3b, 3c, 3d in the memory portion 6 of the test device 4;
- including, in the fault message, the PAN Identificators 3a, 3b, 3c, 3d pre-stored in the memory portion 6 corresponding to the PAN Identificators 3a, 3b, 3c, 3d not received by the test device 4, in order to identify the corresponding ZigBee devices 2a, 2b, 2c, 2d as defective devices.

The step of pre-storing the predetermined PAN Identificator(s) 3a, 3, 3c, 3d is executed before the step of transmitting the PAN Identificator(s) 3a, 3b, 3c, 3d to the test device 4.

The method also provides a step for matching the PAN Identificator(s) 3a, 3b, 3c, 3d transmitted by the corresponding ZigBee devices 2a, 2b, 2c, 2d to the pre-stored PAN Identificator(s) 3a, 3b, 3c, 3d and returning a positive test message for the ZigBee devices 2a, 2b, 2c, 2d for which the transmitted PAN Identificator(s) 3a, 3b, 3c, 3d matches with the pre-stored PAN Identificator(s) 3a, 3b, 3c, 3d.

The PAN Identificator(s) 3a, 3, 3c, 3d is stored in a memory portion of the corresponding IC Card 1a, 1b, 1c, 1d.

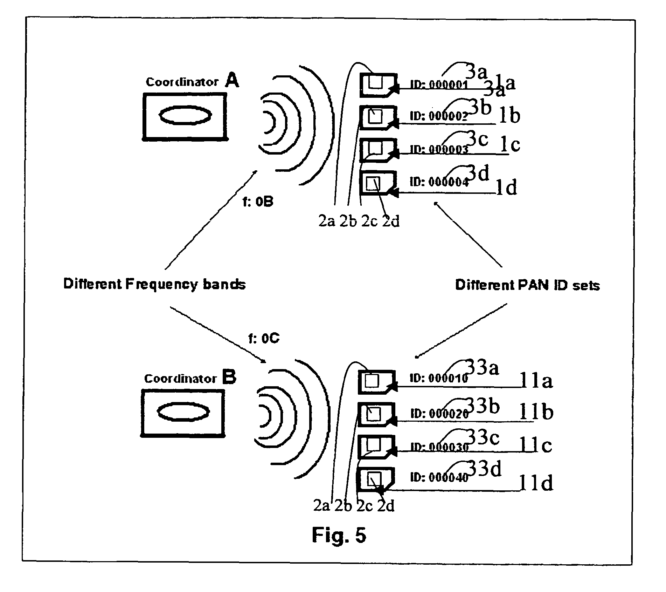

According to the method of the present invention, a plurality of test devices 4, also indicated in figure 5 as coordinator A and coordinator B, may be contemporary used for testing a plurality of IC Cards, including respective ZigBee devices. For sake of clarity, the term test device is intended as an apparatus or a testing line including a testing head for testing the ZigBee.

A first test device or coordinator A is provided to test a first set of IC Cards 1a, 1b, 1c, 1d and a second test device or coordinator B is provided to test a second set of IC Cards 11a, 11b, 11c, 11d. The IC Cards 1a, 1b, 1c, 1d, 11a, 11b, 11c, 11d include corresponding ZigBee devices, respectively 2a, 2b, 2c, 2d, 22a, 22b, 22c, 22d.

Since the ZigBee devices may communicate over a range of 100m, even with some interposing piece of fabric, and the Coordinators A and B may be located, for example, at a distance of few meters, the method of the present invention provides to shield the test devices A and B to avoid collisions during the test.

In other words, as will be apparent from the following description, the method provides that the Coordinator A tests the ZigBee devices 2a, 2b, 2c, 2d of the first set without being disturbed by the ZigBee devices 22a, 22b, 22c, 22d of the second set, even if such devices 22a, 22b, 22c, 22d are located in a range wherein the Coordinator A is operative. At the same time, the method provides that the Coordinator B may test the ZigBee devices 22a, 22b, 22c, 22d of the second set without being disturbed by the ZigBee devices 2a, 2b, 2c, 2d of the first set.

More particularly, according to the method, the ZigBee devices 2a, 2b, 2c, 2d of the first set are associated to a first set of PAN Identificators 3a, 3b, 3c, 3d while the ZigBee devices 22a, 22b, 22c, 22d of the second set are associated to a second set of PAN Identificators 33a, 33b, 33c, 33d, different from the PAN Identificators of the first set.

Advantageously, this association is made to separate the IC Cards 1a, 1b, 1c, 1d intended to be tested by the first Coordinator A with respect to the IC Cards 11a, 11b, 11c, 11d intended to be test by the second Coordinator B. This avoids the use of a common database storing the PAN IDs of all the IC Cards 1a, 1b, 1c, 1d, 11a, 11b, 11c, 11d and a complex database management for detecting if a PAN ID received by a Coordinator A or B is associated to the first or to the second set of ZigBee devices, resulting in an undesirable "Seek and Load" time.

Advantageously, the association of separate PAN Identificators to the corresponding Coordinators A and B may be executed only one time and for testing purposes. In this way, the "Seek and Load" time is void since the specific PAN Identificators are loaded into the test devices and the corresponding PAN IDs are loaded in the ZigBee devices before testing, for example during an assembly or personalization phase of the IC Cards.

Advantageously, a common database is not required, nor a complex database management, since each test device works locally with specific and dedicated PAN Identificators.

The method according to the invention is now briefly described with reference to figure 5, wherein two sets of IC Cards 1a, 1b, 1c, 1d and 11a, 11b, 11c, 11d are tested from test devices, respectively A and B. The IC Cards include corresponding ZigBee devices 2a, 2b, 2c, 2d and 22a, 22b, 22c, 2d.

More particularly, the Coordinator A is programmed to test the ZigBee devices of the first set of IC Cards 1a, 1b, 1c, 1d, associated to corresponding PAN IDs 000001, 000002, 000003, 000004 and the second Coordinator B is programmed to test the ZigBee devices of the second set of IC Cards 11a, 11b, 11c, 11d, associated to the PAN IDs 000010, 000020, 000030, 000040.

The PAN Identificators are loaded on the respective Coordinator A or B by a programming head of a production/testing line so that every production line always works with reference to the PAN IDs associated to the predetermined set of IC Cards.

The method of the invention also provides to manage the transmission frequency of different test devices, in order to avoid that the RF (Radio Frequency) transmitted by the first Coordinator A interfere with the RF transmitted by the second Coordinator B and vice versa.

In fact, each the ZigBee devices and test device may communicate in a range of 100m, the method of the invention provides to shield different test lines one another, avoiding interferences in the transmission of signals and erroneous "Error Messages".

At this aim, it is worth to note that a ZigBee standard, complying with the IEEE 802.15.4 standard, specifies to operate on the 2.45 GHz band. According to such specification, 16 RF channels are available, OB, 0C, 0D, 0E, 0F, 10, 11, 12, 13, 14, 15, 16, 17, 18, 19, 1A for transmission.

The method of the invention provides that two or more test devices contemporary use different RF channel, complying with the IEEE 802.15.4 standard.

For example, two or more production/testing lines working together in a small environment and located at a reciprocal distance d less than 100m, transmits over a different RF channel, as schematically represented in figure 5 wherein it is schematically shown the Coordinator A, associated to the RF channel 0B, and the Coordinator B, associated to the RF channel 0C. In other words, each test device transmits over predetermined RF channel, so than radiofrequency interferences are avoided.

According to another embodiment of the present invention, the radiofrequency interferences are avoided also when two or more test devices are not associated to a predetermined RF channel but they transmits over all the available RF channels.

More particularly, the two or more test devices are synchronized to transmit over different RF Channels in a same time slot T.

For example, the Coordinator A and the Coordinator B may use all the RF channels, avoiding interferences according to the table below:

| **Coordinator A** | | | | | | | | |
|---|---|---|---|---|---|---|---|---|
| *Time Slot* | T0 | T1 | T2 | T3 | T4 | T5 | T6 | ... |
| *RF Channel* | 0B | 0C | 0D | 0E | 0F | 10 | 11 | ... |
| | | | | | | | | |

| **Coordinator B** | | | | | | | | |
|---|---|---|---|---|---|---|---|---|
| *Time Slot* | T0 | T1 | T2 | T3 | T4 | T5 | T6 | ... |
| *RF Channel* | 10 | 11 | 12 | 13 | 14 | 15 | 16 | ... |

Testing sequence, sent from the test devices to the ZigBee devices, are transmitted in time slots; a test device sends the test sequence over an RF channels available in a current time slot, in a sequential way. In other words, for each time slot, the test devices transmits over a single and different RF channel.

In a preferred embodiment, the method provides that the Coordinator A and Coordinator B do not use in a same time slot subsequent or neighboring RF Channels.

For example, with reference to the table above, the method avoids that in a time slot T0 the Coordinator A transmits over the RF channel 11 and Coordinator B over the neighboring RF channel 12 but it provides that, if the Coordinator A transmits over the RF channel OB, the Coordinator B transmits over the RF channel 10. This allows to easier synchronizing the transmission.

Advantageously, according to the method it is possible to use in a same environment, several test devices regardless of space and shielding constraints and without modifications to the test devices.

The present invention also relates to a test device 4 for testing a ZigBee device 2a of the type associated to a predetermined PAN Identificator 3a, included in an IC Card 1a.

More particularly, the test device 4 comprises means for initializing a ZigBee network whereto the ZigBee device 2a may connect for transmitting the corresponding PAN Identificator 3a.

According to the present invention, the test device 4 includes a memory portion 6 for pres-storing the predetermined PAN Identificator 3a and detecting means for detecting the PAN Identificator 3a transmitted from the ZigBee device 2a.

More particularly, the test device includes output means for returning the PAN Identificator 3a stored in the memory portion 6 if the step of detecting does not detect a PAN Identificator 3a transmitted from the ZigBee device 2a corresponding to the PAN Identificator 3a stored in the memory portion 6.

Advantageously, the test device 4 may be used for testing a plurality of IC Cards 1, 1b, 1c, 1d including corresponding ZigBee devices 2a, 2b, 2c, 2d to be tested.

The ZigBee devices 2a, 2b, 2c, 2d to be tested are associated to predetermined PAN Identificators 3a, 3b, 3c, 3d which are pre-stored in the memory portion 6 of the test device 4 and in a memory portion of the respective IC Cards 1, 1b, 1c, 1d.

The test device provides the detecting means detect the PAN Identificators 3a, 3b, 3c, 3d transmitted from the respective ZigBee devices 2a, 2b, 2c, 2d.

The output means returns a list of PAN Identificators 3c stored in said memory portion 6 if the step of detecting does not detect that a PAN Identificators 3c corresponding to pre-stored PAN Identificators 3c are not transmitted from the respective ZigBee devices 2c to the test device.

Hereafter are resumed the main elements of the test device 4 according to the invention:
- means for initializing a ZigBee network whereto the ZigBee device 2a may connect and transmit the corresponding PAN Identificator 3a;
- means for returning a fault message, indicative that such ZigBee device 2a is unable to connect and transmit (if the PAN Identificator 3 is not received);
- a memory portion 6 of pres-storing the predetermined PAN Identificator 3a.

The fault message includes the PAN Identificator 3a pre-stored in the memory portion 6 for identifying the ZigBee device 2a as a defective device.

The test device may be used to test a plurality of IC Cards providing that:
- the memory portion 6 pre-stores a plurality of predetermined PAN Identificators 3a, 3b, 3c, 3d associated to corresponding ZigBee devices 2a, 2b, 2c, 2d included in respective IC Cards 1, 1b, 1c, 1d.
- the fault message includes the PAN Identificators 3a, 3b, 3c, 3d pre-stored in the memory portion 6 corresponding to the PAN Identificators 3a, 3b, 3c, 3d not received, in order to identify the corresponding ZigBee devices 2a, 2b, 2c, 2d as defective devices.

The test device 4 also comprises means for matching the PAN Identificator(s) 3a, 3b, 3c, 3d transmitted by the corresponding ZigBee devices 2a, 2b, 2c, 2d to the PAN Identificator(s) 3a, 3b, 3c, 3d pre-stored in the memory portion 6. A detecting portion is included for receiving the PAN identificator 3a, 3b, 3c, 3d when the IC Cards are located within a predetermined range.

Advantageously, according to the method and the test device of the present invention, the ZigBee devices included in a plurality of IC Cards may be checked rapidly and without slowing down the time for testing the overall hardware and software resources of the IC Card.

Advantageously, checking a communication between the ZigBee device and the ZigBee Coordinator takes no more time than checking a communication between the IC Card and a read write device, connected through contact pads.

Advantageously, the test device according to the present invention identifies the defective IC Card by returning a list of Identificators associated to the defective IC Cards.

Advantageously, the defective IC Cards may be selected anytime since its Identificator, stored inside a memory portion of the IC Card, may be read through the read write device, via contact pads, or it may be written on a support of the IC Card so that a user may identify it.

## Claims

1. Method for testing a ZigBee device (2a) included in an IC Card (1a), comprising the following steps:
- associating a corresponding Personal Area Network or PAN Identificator (3a) to the ZigBee device (2a) and storing the corresponding PAN Identificator (3a) in a memory portion of said IC Card (1a);
- providing a test device (4) which initializes a ZigBee network;
- connecting the ZigBee device (2a) to the ZigBee network and transmitting the corresponding PAN Identificator (3a) to the test device (4) by the ZigBee device (2a),
- said test device (4) returning a fault message, indicative of a failure of said step of connecting and transmitting, if it does not receive the corresponding PAN Identificator (3a),
**characterized by**:
- pre-storing the corresponding PAN Identificator (3a) in a memory portion (6) of the test device (4);
- including in said fault message, the corresponding PAN Identificator (3a) pre-stored in said memory portion (6) if said test device (4) does not receive said corresponding PAN Identificator (3a), in order to identify the ZigBee device (2a) as a defective device.

2. Method according to claim 1 **characterized by**
- connecting a plurality of IC Cards (1a, 1b, 1c, 1d) to said ZigBee network, said IC Cards (1a, 1b, 1c, 1d) including respective ZigBee devices (2a, 2b, 2c, 2d) associated to corresponding PAN Identificators (3a, 3b, 3c, 3d) and storing said corresponding PAN Identificators (3a, 3b, 3c, 3d) in a memory portion of said IC Cards (1a, 1b, 1c, 1d) respectively; transmitting the corresponding PAN Identificators (3a, 3b, 3c, 3d) to the test device (4) by the respective ZigBee devices (2a, 2b, 2c, 2d);
- pre-storing the corresponding PAN Identificators (3a, 3b, 3c, 3d) in said memory portion (6) of the test device (4);
- including, in said fault message, the corresponding PAN Identificators (3a, 3b, 3c, 3d) pre-stored in said memory portion (6) which are not received by said test device (4), in order to identify the corresponding ZigBee devices (2a, 2b, 2c, 2d) as defective devices.

3. Method according to claims 1 or 2 **characterized by** the fact that said step of pre-storing the corresponding PAN Identificator(s) (3'd, 3b, 3c, 3d) is executed before said step of transmitting the corresponding PAN Identificator(s) (3a, 3b, 3c, 3d) to the test device (4).

4. Method according to claim 3 **characterized by**
- providing at least a second test device (4) which initializes a second ZigBee network;
- further connecting a set of IC Cards (11a, 11b, 11 c, 11d) to said second ZigBee network, the IC Cards (11a, 11b, 11c, 11d) of said set including respective ZigBee devices (22a, 22b, 22c, 22d) associated to corresponding PAN Identificators (33a, 33b, 33c, 33d) and storing the corresponding PAN Identificators (33a, 33b, 33c, 33d); transmitting the corresponding PAN Identificators (33a, 33b, 33c, 33d) to the second test device (4) by the respective ZigBee devices (22a, 22b, 22c, 22d);
- pre-storing the corresponding PAN Identificators (33a, 33b, 33c, 33d) in a memory portion of the second test device (4);
- returning a second fault message, comprising said corresponding PAN Identificators (33a, 33b, 33c, 33d) pre-stored in said memory portion of the second test device (4) and indicative of a failure of said step of further connecting and transmitting, if the second test device (4) does not receive the corresponding PAN Identificators (33a, 33b, 33c, 33d) of the set of ZigBee devices (22a, 22b, 22c, 22d);
the method providing that the corresponding PAN Identificators (3a, 3b, 3c, 3d) associated to said ZigBee devices (2a, 2b, 2c, 2d) are different from the corresponding PAN Identificators (33a, 33b, 33c, 33d) associated to said set of ZigBee devices (22a, 22b, 22c, 22d).

5. Method according to claim 4 **characterized by** the fact that said test device and said second test device transmit over RF frequencies compliant with a predetermined IEEE 802.15.4 standard.

6. Method according to claim 5 **characterized by** the fact that said test device and said second test device transmit over a first and a second predetermined frequency of said RF frequencies, said first predetermined frequency being different from said second predetermined frequency.

7. Method according to claim 5 **characterized by** the fact that said test device and said second test device transmit over all the RF frequencies, providing that, when the test device transmits over a first frequency, the second test device transmit over a second frequency, different from the first frequency.

8. Method according to claim 7 **characterized by** selecting said first and second frequencies so that they are not neighboring inside said RF frequencies.

9. Method according to claim 8 **characterized by** the fact that said test device and said second test device transmit during predetermined time slots.

10. Method according to any preceding claims **characterized by** comprising a step for matching the corresponding PAN Identificator(s) (3a, 3b, 3c, 3d; 33a, 33b, 33c, 33d) transmitted by the corresponding ZigBee devices (2a, 2b, 2c, 2d; 22a, 22b, 22c, 22d) to the pre-stored PAN Identificator(s) (3a, 3b, 3c, 3d; 33a, 33b, 33c, 33d).

11. Method according to claim 10 **characterized by** returning a positive test message for the ZigBee devices (2a, 2b, 2c, 2d; 22a, 22b, 22c, 22d) for which the corresponding PAN Identificator(s) (3a, 3b, 3c, 3d; 33a, 33b, 33c, 33d) matches with the pre-stored corresponding PAN Identificator(s) (3a, 3b, 3c, 3d; 33a, 33b, 33c, 33d).

12. Test device (4) for testing a ZigBee device (2a) of the type included in an IC Card (1a) and associated to a corresponding Personal Area Network or PAN Identificator (3a), said IC Card including a memory portion storing said corresponding PAN Identificator (3a), the test device (4) comprising means for initializing a ZigBee network whereto the ZigBee device (2a) may connect and transmit the corresponding PAN Identificator (3a) and means for returning a fault message, indicative that such ZigBee device (2a) is unable to connect and transmit, if the corresponding PAN Identificator (3) is not received, **characterized by** the fact that:
- a memory portion (6) of said test device (4) is adapted to pre-store the corresponding PAN Identificator (3a) and by the fact that the test device (4) further comprises means for including in the fault message said corresponding PAN Identificator (3a) pre-stored in said memory portion (6) if the test device (4) does not receive said corresponding PAN Identificator (3a), in order to identify the ZigBee device (2a) as a defective device.

13. Test device (4) according to claim 12 **characterized by** the fact that
- said memory portion (6) is adpated to pre-store a plurality of corresponding PAN Identificators (3a, 3b, 3c, 3d) associated to corresponding ZigBee devices (2a, 2b, 2c, 2d) included in respective IC Cards (1, 1b, 1c, 1d), said respective IC Cards (1, 1b, 1c, 1d) storing the corresponding PAN Identificators (3a, 3b, 3c, 3d) in respective memory portions;
- said fault message includes the corresponding PAN Identificators (3a, 3b, 3c, 3d) pre-stored in said memory portion (6) which are not received, in order to identify the corresponding ZigBee devices (2a, 2b, 2c, 2d) as defective devices.

14. Test device (4) according to claim 12 **characterized by** comprising means for matching the corresponding PAN Identificator(s) (3a, 3b, 3c, 3d) transmitted by the corresponding ZigBee devices (2a, 2b, 2c, 2d) to the corresponding PAN Identificator(s) (3a, 3b, 3c, 3d) pre-stored in said memory portion (6).

15. Test device (4) according to claim 13 **characterized by** comprising a detecting portion for receiving the corresponding PAN identificators (3a, 3b, 3c, 3d) from said corresponding ZigBee devices (2a, 2b, 2c, 2d) when said respective IC Cards are located within a predetermined range.

## Patentansprüche

1. Verfahren zum Prüfen einer ZigBee-Vorrichtung (2a), die in einer IC-Karte (1a) enthalten ist, mit den folgenden Schritten:
- Zuordnen eines entsprechenden Personal-Area-Network- oder PAN-Identifikators (3a) zur ZigBee-Vorrichtung (2a) und Speichern des entsprechenden PAN-Identifikators (3a) in einem Speicherbereich der IC-Karte (1a);
- Bereitstellen einer Prüfvorrichtung (4), die ein ZigBee-Netzwerk initialisiert;
- Verbinden der ZigBee-Vorrichtung (2a) mit dem ZigBee-Netzwerk und Übertragen des entsprechenden PAN-Identifikators (3a) an die Prüfvorrichtung (4) durch die ZigBee-Vorrichtung (2a),
- wobei die Prüfvorrichtung (4) eine Fehlermeldung zurück gibt, die einen Fehler des Schritts des Verbindens und des Übertragens anzeigt, falls sie den entsprechenden PAN-Idlentifikator (3a) nicht empfängt,
**gekennzeichnet durch**:
- Speichern des entsprechenden PAN-Identifikators (3a) in einem Speicherbereich (6) der Prüfvorrichtung (4) im Voraus;
- Einfügen des entsprechenden PAN-Identifikators (3a), der in dem Speicherbereich (6) im Voraus gespeichert ist, in die Fehlermeldung, falls die Prüfvorrichtung (4) den entsprechenden PAN-Identifikator (3a) nicht empfängt, um die ZigBee-Vorrichtung (2a) als eine fehlerhafte Vorrichtung zu identifizieren.

2. Verfahren nach Anspruch 1,
**gekennzeichnet durch**
- Verbinden mehrerer IC-Karten (1a, 1b, 1c, 1d) mit dem ZigBee-Netzwerk, wobei die IC-Karten (1a, 1b, 1c, 1d) jeweilige ZigBee-Vorrichtungen (2a, 2b, 2c, 2d) enthalten, die entsprechenden PAN-Identifikatoren (3a, 3b, 3c, 3d) zugeordnet sind, und Speichern der entsprechenden PAN-Identifikatoren (3a, 3b, 3c, 3d) jeweils in einem Speicherbereich der IC-Karten (1a, 1b, 1c, 1d); Übertragen der entsprechenden PAN-Identifikatoren (3a, 3b, 3c, 3d) an die Prüfvorrichtung (4) **durch** die jeweiligen ZigBee-Vorrichtungen (2a, 2b, 2c, 2d);
- Speichern der entsprechenden PAN-Identifikatoren (3a, 3b, 3c, 3d) in dem Speicherbereich (6) der Prüfvorrichtung (4) im Voraus;
- Einfügen der entsprechenden PAN-Identifikatoren (3a, 3b, 3c, 3d), die in dem Speicherbereich (6) im Voraus gespeichert sind und nicht von der Prüfvorrichtung (4) empfangen werden, in die Fehlermeldung, um die entsprechenden ZigBee-Vorrichtungen (2a, 2b, 2c, 2d) als fehlerhafte Vorrichtungen zu identifizieren.

3. Verfahren nach Anspruch 1 oder 2,
**dadurch gekennzeichnet, dass**
der Schritt des Im-Voraus-Speicherns des/der entsprechenden PAN-Identifikators/-en (3a, 3b, 3c, 3d) vor dem Schritt des Übertragens des/der entsprechenden PAN-Identifikators/-en (3a, 3b, 3c, 3d) an die Prüfvorrichtung (4) ausgeführt wird.

4. Verfahren nach Anspruch 3,
**gekennzeichnet durch**
- Bereitstellen wenigstens einer zweiten Prüfvorrichtung (4), die ein zweites ZigBee-Netzwerk initialisiert;
- ferner Verbinden eines Satzes von IC-Karten (11a, 11b, 11c, 11d) mit dem zweiten ZigBee-Netzwerk, wobei die IC-Karten (11a, 11b, 11c, 11d) dieses Satzes jeweilige ZigBee-Vorrichtungen (22a, 22b, 22c, 22d) enthalten, die entsprechenden PAN-Identifikatoren (33a, 33b, 33c, 33d) zugeordnet sind und Speichern der entsprechenden PAN-Identifikatoren (33a, 33b, 33c, 33d); Übertragen der entsprechenden PAN-Identifikatoren (33a, 33b, 33c, 33d) an die zweite Prüfvorrichtung (4) **durch** die jeweiligen ZigBee-Vorrichtungen (22a, 22b, 22c, 22d);
- Speichern der entsprechenden PAN-Identifikatoren (33a, 33b, 33c, 33d) in einem Speicherbereich der zweiten Prüfvorrichtung (4) im Voraus;
- Zurückgeben einer zweiten Fehlermeldung, die die entsprechenden PAN-Identifikatoren (33a, 33b, 33c, 33d) umfasst, die in dem Speicherbereich der zweiten Prüfvorrichtung (4) im Voraus gespeichert sind, und einen Fehler des Schritts des weiteren Verbindens und Übertragens anzeigt, falls die zweite Prüfvorrichtung (4) die entsprechenden PAN-Identifikatoren (33a, 33b, 33c, 33d) des Satzes der zigBee-Vorrichtungen (22a, 22b, 22c, 22d) nicht empfängt;
wobei das Verfahren voraussetzt, dass die entsprechenden PAN-Identifikatoren (3a, 3b, 3c, 3d), die den ZigBee-Vorrichtungen (2a, 2b, 2c, 2d) zugeordnet sind, von den entsprechenden PAN-Identifikatoren (33a, 33b, 33c, 33d), die dem Satz der ZigBee-Vorrichtungen (22a, 22b, 22c, 22d) zugeordnet sind, verschieden sind.

5. Verfahren nach Anspruch 4,
**dadurch gekennzeichnet, dass**
die Prüfvorrichtung und die zweite Prüfvorrichtung über HF-Frequenzen nach einem vorbestimmten IEEE 802.15.4-Standard übertragen.

6. Verfahren nach Anspruch 5,
**dadurch gekennzeichnet, dass**
die Prüfvorrichtung und die zweite Prüfvorrichtung über eine erste und eine zweite vorbestimmte Frequenz der HF-Frequenzen übertragen, wobei die erste vorbestimmte Frequenz von der zweiten vorbestimmten Frequenz verschieden ist.

7. Verfahren nach Anspruch 5,
**dadurch gekennzeichnet, dass**
die Prüfvorrichtung und die zweite Prüfvorrichtung über alle HF-Frequenzen mit der Maßgabe übertragen, dass, wenn die Prüfvorrichtung über eine erste Frequenz überträgt, die zweite Prüfvorrichtung über eine zweite, von der ersten Frequenz verschiedenen Frequenz überträgt.

8. Verfahren nach Anspruch 7,
**gekennzeichnet durch**
Auswählen der ersten und zweiten Frequenzen derart, dass sie innerhalb der HF-Frequenzen nicht benachbart sind.

9. Verfahren nach Anspruch 8,
**dadurch gekennzeichnet, dass**
die Prüfvorrichtung und die zweite Prüfvorrichtung während vorbestimmter Zeitschlitze übertragen.

10. Verfahren nach einem der vorhergehenden Ansprüche,
**gekennzeichnet durch**
das Umfassen eines Schritts zum Abgleichen der entsprechenden PAN-Identifikatoren (3a, 3b, 3c, 3d; 33a, 33b, 33c, 33d), die von den entsprechenden ZigBee-Vorrichtungen (2a, 2b, 2c, 2d; 22a, 22b, 22c, 22d) übertragen werden, mit den im Voraus gespeicherten PAN-Identifikatoren (3a, 3b, 3c, 3d; 33a, 33b, 33c, 33d).

11. Verfahren nach Anspruch 10,
**gekennzeichnet durch**
Zurückgeben eine positiven Prüfmeldung für die ZigBee-Vorrichtungen (2a, 2b, 2c, 2d; 22a, 22b, 22c, 22d), für welche die entsprechenden PAN-Identifikatoren (3a, 3b, 3c, 3d; 33a, 33b, 33c, 33d) mit den im Voraus gespeicherten entsprechenden PAN-Identifikatoren (3a, 3b, 3c, 3d; 33a, 33b, 33c, 33d) übereinstimmen.

12. Prüfvorrichtung (4) zum Prüfen einer ZigBee-Vorrichtung (2a) der in einer IC-Karte (1a) enthaltenen und einem entsprechenden Personal-Area-Network- oder PAN-Identifikator (3a) zugeordneten Art, wobei die IC-Karte einen Speicherbereich umfasst, der den entsprechenden PAN-Identifikator (3a) speichert, wobei die Prüfvorrichtung (4) Mittel zur Initialisierung eines ZlgBee-Netzwerks aufweist, mit dem die ZigBee-Vorrichtung (2a) sich verbinden und den entsprechenden PAN-Identifikator (3a) übertragen kann, und Mittel zur Rückgabe eine Fehlermeldung, die anzeigt, dass die ZigBee-Vorrichtung (2a) sich nicht verbinden und übertragen kann, falls der entsprechende PAN-Identifikator (3a) nicht empfangen wird,
**dadurch gekennzeichnet, dass**:
- ein Speicherbereich (6) der Prüfvorrichtung (4) angepasst ist, den entsprechenden PAN-Identifikator (3a) im Voraus zu speichern, und die PrüfVorrichtung (4) ferner Mittel zum Einfügen des entsprechenden PAN-Identifikators (3a), der in dem Speicherbereich (6) im Voraus gespeichert ist, in die Fehlermeldung aufweist, falls die Prüfvorrichtung (4) den entsprechenden PAN-Identifikator (3a) nicht empfängt, um die ZigBee-Vorrichtung (2a) als eine fehlerhafte Vorrichtung zu identifizieren.

13. Prüfvorrichtung (4) nach Anspruch 12,
**dadurch gekennzeichnet, dass**
- der Speicherbereich (6) angepasst ist, mehrere entsprechende PAN-Identifikatoren (3a, 3b, 3c, 3d), die entsprechenden ZigBee-Vorrichtungen (2a, 2b, 2c, 2d) zugeordnet sind, die in jeweiligen IC-Karten (1, 1b, 1c, 1d) enthalten sind, im Voraus zu speichern, wobei die IC-Karten (1, 1b, 1c, 1d) die entsprechenden PAN-Identifikatoren (3a, 3b, 3c, 3d) in jeweiligen Speicherbereichen speichern;
- die Fehlermeldung die entsprechenden PAN-Identifikatoren (3a, 3b, 3c, 3d), die in dem Speicherbereich (6) im Voraus gespeichert sind, enthält, die nicht empfangen werden, um die entsprechenden ZigBee-Vorrichtungen (2a, 2b, 2c, 2d) als fehlerhafte Vorrichtungen zu identifizieren.

14. Prüfvorrichtung (4) nach Anspruch 12,
**gekennzeichnet durch**
das Umfassen von Mitteln zum Abgleichen der entsprechenden PAN-Identifikatoren (3a, 3b, 3c, 3d), die von den entsprechenden ZigBee-Vorrichtungen (2a, 2b, 2c, 2d) übertragen werden, mit den entsprechenden PAN-Identifikatoren (3a, 3b, 3c, 3d), die in dem Speicherbereich (6) im Voraus gespeichert sind.

15. Prüfvorrichtung (4) nach Anspruch 13,
**gekennzeichnet durch**
das Umfassen eines Detektionsteils zum Empfangen der entsprechenden PAN-Identifikatoren (3a, 3b, 3c, 3d) von den entsprechenden ZigBee-Vorrichtungen (2a, 2b, 2c, 2d), sobald die entsprechenden IC-Karten innerhalb eines vorbestimmten Bereichs angeordnet werden.

## Revendications

1. Méthode de test d'un dispositif Zigbee (2a) intégré dans une carte IC (1a), comprenant les étapes suivantes :
- associer un identificateur correspondant de réseau de zone personnelle ou FAN (3a) au dispositif ZigBee (2a) et enregistrer l'identificateur PAN correspondant (3a) dans une partie de la mémoire de la dite carte IC (1a),
- fournir un dispositif de test (4) qui initialise un réseau ZigBee,
- connecter le dispositif ZigBee (2a) au réseau ZigBee et transmettre l'identificateur PAN correspondant (3a) au dispositif de test (4) par le dispositif ZigBee (2a),
- ledit dispositif de test (4) renvoyant un message d'erreur, indicatif d'un échec de ladite étape de connexion et de transmission, s'il ne reçoit pas l'identificateur PAN correspondant (3a),
**caractérisé par** :
- pré-enregistrer l'identificateur PAN correspondant (3a) dans une partie de la mémoire (6) du dispositif de test (4),
- inclure, dans ledit message d'erreur, l'identificateur PAN correspondant (3a) préenregistré dans ladite partie de la mémoire (6) si ledit dispositif de test (4) ne reçoit pas ledit identificateur PAN correspondant (3a) afin d'identifier le dispositif ZigBee (2a) comme un dispositif défectueux.

2. Méthode selon la revendication 1, **caractérisée par** les étapes suivantes :
- connecter une pluralité de cartes IC (1a, 1b, 1c, 1d) audit réseau ZigBee, lesdites cartes IC (1a, 1b, 1c, 1d) incluant des dispositifs ZigBee respectifs (2a, 2b, 2c, 2d) associés aux identificateurs PAN correspondants (3a, 3b, 3c, 3d) et enregistrer lesdits identificateurs PAN correspondants (3a, 3b, 3c, 3d) dans une partie de la mémoire desdites cartes IC (1a, 1b, 1c, 1d) respectivement, transmettre les identificateurs PAN correspondants (3a, 3b, 3c, 3d) au dispositif de test (4) par les dispositifs ZigBee correspondants (2a, 2b, 2c, 2d),
- pré-enregistrer les identificateurs PAN correspondants (3a, 3b, 3c, 3d) dans ladite partie de mémoire (6) du dispositif de test (4),
- inclure, dans ledit message d'erreur, les identificateurs PAN correspondants (3a, 3b, 3c, 3d) préenregistrés dans ladite partie de mémoire (6) qui ne sont pas reçus par ledit dispositif de test (4), afin d'identifier les dispositifs ZigBee correspondants (2a, 2b, 2c, 2d) comme des dispositifs défectueux.

3. Méthode selon les revendications 1 ou 2, **caractérisée en ce que** ladite étape de pré-enregistrement des identificateurs PAN correspondants (3a, 3b, 3c, 3d) est exécutée avant ladite étape de transmission des identificateurs PAN correspondants (3a, 3b, 3c, 3d) au dispositif de test (4).

4. Méthode selon la revendication 3, **caractérisée par** les étapes suivantes :
- fournir au moins un deuxième dispositif de test (4) qui initialise un deuxième réseau ZigBee,
- en outre connecter un jeu de cartes IC (11a, 11b, 11c, 11d) audit deuxième réseau ZigBee, les cartes IC (11a, 11b, 11c, 11d) dudit jeu incluant des dispositifs ZigBee respectifs (22a, 22b, 22c, 22d) associés aux identificateurs PAN correspondants (33a, 33b, 33c, 33d) et enregistrer les identificateurs PAN correspondants (33a, 33b, 33c, 33d), transmettre les identificateurs PAN correspondants (33a, 33b, 33c, 33d) au deuxième dispositif de test (4) par les dispositifs ZigBee respectifs (22a, 22b, 22c, 22d),
- pré-enregistrer les identificateurs PAN correspondants (33a, 33b, 33c, 33d) dans une partie de la mémoire du deuxième dispositif de test (4),
- retourner un deuxième message d'erreur, comprenant les dits identificateurs PAN correspondants (33a, 33b, 33c, 33d) préenregistrés dans ladite partie de la mémoire du deuxième dispositif de test (4) et indicatif d'un échec de ladite étape de connexion et transmission supplémentaire, si le deuxième dispositif de test (4) ne reçoit pas les identificateurs PAN correspondants (33a, 33b, 33c, 33d) du jeu de dispositifs ZigBee (22a, 22b, 22c, 22d),
la méthode assurant que les identificateurs PAN (3a, 3b, 3c, 3d) associés audits dispositifs ZigBee (2a, 2b, 2c, 2d) sont différents des identificateurs PAN correspondants (33a, 33b, 33c, 33d) associés audit jeu de dispositifs ZigBee (22a, 22b, 22c, 22d).

5. Méthode selon la revendication 4, **caractérisé en ce que** ledit dispositif de test et ledit deuxième dispositif de test transmettent sur des fréquences RF compatibles avec un standard IEEE 802.15.4 prédéterminé.

6. Méthode selon la revendication 5, **caractérisée en ce que** ledit dispositif de test et ledit deuxième dispositif de test transmettent sur une première et une deuxième fréquence prédéterminée desdites fréquences RF, ladite première fréquence prédéterminée étant différente de ladite deuxième fréquence prédéterminée.

7. Méthode selon la revendication 5, **caractérisée en ce que** ledit test et ledit deuxième dispositif de test transmettent sur toutes les fréquences RF, à condition que, quand le dispositif de test transmet sur une première fréquence, le deuxième dispositif de test transmet sur une deuxième fréquence, différente de la première fréquence.

8. Méthode selon la revendication 7, **caractérisée en ce que** lesdites première et deuxième fréquences sont choisies de manière à ne pas être voisines à l'intérieur desdites fréquences RF.

9. Méthode selon la revendication 8, **caractérisée en ce que** ledit dispositif de test et ledit deuxième dispositif de test transmettent pendant des intervalles de temps prédéterminées.

10. Méthode selon l'une quelconque des revendications précédentes, **caractérisée en ce que** qu'elle comprend une étape pour faire correspondre les identificateurs PAN correspondants (3a, 3b, 3c, 3d, 33a, 33b, 33c, 33d) transmis par les dispositifs ZigBee correspondants (2a, 2b, 2c, 2d, 22a, 22b, 22c, 22d) aux identificateurs PAN correspondants (3a, 3b, 3c, 3d, 33a, 33b, 33c, 33d).

11. Méthode selon la revendication 10, **caractérisée par** le renvoi d'un message de test positif pour les dispositifs ZigBee (2a, 2b, 2c, 2d, 22a, 22b, 22c, 22d) pour lequel l'identificateur(s) PAN correspondant (3a, 3b, 3c, 3d, 33a, 33b, 33c, 33d) corresponde aux identificateurs PAN correspondants préenregistrés (3a, 3b, 3c, 3d, 33a, 33b, 33c, 33d).

12. Dispositif de test (4) pour tester un dispositif ZigBee (2a) du type inclus dans une carte IC (1a) et associé à une identificateur de réseau de zone personnelle ou PAN (3a), ladite carte IC incorporant une partie de mémoire stockant lesdits identificateurs PAN correspondants (3a), le dispositif de test (4) comprenant un moyen d'initialiser un réseau ZigBe auquel le dispositif ZigBee (2a) peut se connecter et transmettre l'identificateur PAN correspondant (3a) et un moyen de renvoyer un message d'erreur indicatif que ce dispositif ZigBee (2a) est incapable de se connecteur et de transmettre, si l'identificateur PAN correspondant (3) n'est pas reçu, **caractérisé en ce que** :
- une partie de la mémoire (6) dudit dispositif de test (4) est adaptée à pré-enregistrer l'identificateur PAN correspondant (3a) et **en ce que** le dispositif de test (4) comprend en outre un moyen pour inclure dans le message d'erreur ledit identificateur PAN correspondant (3a) préenregistré dans ladite partie de la mémoire (6) si le dispositif de test (4) ne reçoit pas ledit identificateur PAN correspondant (3a), afin d'identifier le dispositif ZigBee (2a) comme un dispositif défectueux.

13. Dispositif de test (4) selon la revendication 12 **caractérisé en ce que** :
- ladite partie de mémoire (6) est adaptée à pré-enregistrer une pluralité d'identificateurs PAN correspondants (3a, 3b, 3c, 3d) associés à des dispositifs ZigBee correspondants (2a, 2b, 2c, 2d) inclus dans des cartes IC respectives (1, 1b, 1c, 1d), lesdites cartes IC respectives (1, 1b, 1c, 1d) stockant les identificateurs PAN correspondants (3a, 3b, 3c, 3d) dans des parties respectives de la mémoire,
- ledit message d'erreur inclut les identificateurs PAN correspondants (3a, 3b, 3c, 3d) préenregistrés dans ladite partie de la mémoire (6) qui ne sont pas reçus, afin d'identifier les dispositifs ZigBee correspondants (2a, 2b, 2c, 2d) comme des dispositifs défectueux.

14. Dispositif de test (4) selon la revendication 12, **caractérisé en ce qu'**il comprend un moyen pour associer les identificateurs PAN correspondants (3a, 3b, 3c, 3d) transmis par les dispositifs ZigBee correspondants (2a, 2b, 2c, 2d) aux identificateurs PAN correspondants (3a, 3b, 3c, 3d) pré-stockés dans ladite partie de la mémoire (6).

15. Dispositif de test (4) selon la revendication 13, **caractérisé en ce qu'**il comprend une partie de détection pour recevoir les identificateurs PAN correspondants (3a, 3b, 3c, 3d) desdits dispositifs ZigBee correspondants (2a, 2b, 2c, 2d) quand lesdites cartes IC respectives sont situées à l'intérieur d'une gamme prédéterminée.
